# EUROPÄISCHE PATENTANMELDUNG

(11) **EP 3 434 544 A1**
(43) Veröffentlichungstag der Anmeldung: **30.01.2019**
(21) Anmeldenummer: 18171376.9
(22) Anmeldetag: 09.05.2018
(51) Int. Cl.: B60W 10/06, B60W 10/08, B60W 10/26, B60W 20/40, B60W 20/13, B60W 20/12

(54) **MOTORSTEUERUNG FÜR HYBRIDELEKTROFAHRZEUGE**

(30) Priorität: 24.07.2017 DE 102017212642
(71) Anmelder: AUDI AG, 85045 Ingolstadt (DE)
(72) Erfinder: Karl, Bernhard, 85080 Gaimersheim (DE)

(57) **Zusammenfassung**

Die Erfindung betrifft ein Verfahren zur Steuerung des Antriebsstrangs bei Hybridelektrofahrzeugen sowie ein entsprechendes Antriebssystem. Das Verfahren sieht die Unterdrückung des Starts der Verbrennungskraftmaschine vor, wenn sich das Fahrzeug im rein elektrischen Fahrmodus (EV-Modus) befindet und die Fahrdistanz zu einem Zielpunkt des Fahrzeugs weniger als eine vorgegebene Strecke beträgt.

## Beschreibung

Die Erfindung betrifft ein Verfahren zur Steuerung des Antriebsstrangs bei Hybridelektrofahrzeugen sowie ein entsprechendes Antriebssystem.

Bei Hybridelektrofahrzeugen mit EV-Modus (rein elektrisches Fahren) erfolgt bei einer elektrischen Restreichweite von 0 km automatisch ein Start des Verbrennungsmotors. Dabei kommt es häufig vor, dass ein Start des Verbrennungsmotors wenige Meter vor dem Abstellen des Fahrzeugs erfolgt. Dies ist schädlich für den Verbrennungsmotor und die Umwelt und ärgerlich für den Fahrzeugbetreiber.

Vor diesem Hintergrund hat sich die vorliegende Erfindung die Aufgabe gestellt, solche Situationen zu vermeiden.

Aus der US 2017/008513 A1 geht eine Steuervorrichtung für ein Hybridfahrzeug hervor, mit der das Hybridfahrzeug einen Start des Verbrennungsmotors in bestimmten Situationen unterbindet, um Geräuschentwicklung zu vermeiden. Solche Situationen können z.B. die Anwesenheit von Fußgängern in der Nähe des Fahrzeugs sein; bestimmte Tageszeiten; bestimmte Orte oder Zonen wie Parkhäuser, enge Straßen oder die Umgebung der Wohnung des Fahrers. Das Fahrzeug erkennt die Situationen über Sensoren, Timer oder GPS.

US 6 283 086 B1 offenbart eine Motor-Steuervorrichtung für ein Hybridfahrzeug, bei der das Fahrzeug erkennt, wenn es sich in einer Zone mit Verkehrsstau befindet und einen Start-Stop-Betrieb des Verbrennungsmotors im Stau unterbindet.

EP 2 363 312 A2 lehrt ein Steuersystem für ein Hybridfahrzeug, welches das Schmiersystem eines Verbrennungsmotors des Hybridfahrzeugs aufgrund von Umgebungs- und Standortinformationen startet und für eine konstant gute Schmierung des Verbrennungsmotors auch nach einer längeren inaktiven Zeit sorgt.

Die bekannten Systeme berücksichtigen nicht den Ladezustand der Traktionsbatterie des Hybridfahrzeugs. Wenn die Restreichweitenanzeige des elektrischen Antriebs auf Null fällt, wird der Verbrennungsmotor des Fahrzeugs auch dann gestartet, wenn dies eigentlich unerwünscht ist.

Eine Restreichweitenanzeige von 0 km bedeutet aber nicht, dass die Batterie vollständig entladen ist. Um die Lebensdauer der HV-Batterie zu optimieren, wird nur ein Teilbereich der Batteriekapazität genutzt, beispielsweise 20 bis 80% der Gesamtkapazität. Bei einer Restreichweitenanzeige von 0 km ist die HV-Batterie also noch z.B. zu 20% geladen. Erfindungsgemäß wird die Lebensdauer der HV-Batterie gegen die Lebensdauer des Verbrennungsmotors abgewogen und in speziellen Fällen die Batterie "überlastet", um einen Start des Verbrennungsmotors zu vermeiden und dadurch den Verbrennungsmotor und die Umwelt zu schützen.

Erfindungsgemäß wird ein Start des Verbrennungsmotors kurz vor dem Erreichen eines Fahrziels vermieden, indem Informationen aus einem Navigationsgerät verwendet werden und eine eigentlich gesperrte Batteriekapazität der Traktionsbatterie genutzt wird. Die Nutzung der gesperrten Batteriekapazität sollte nicht zu extensiv erfolgen, da sonst die Lebensdauer der Traktionsbatterie stark absinkt.

Gegenstand der Erfindung ist ein Verfahren zum Betreiben eines Hybridelektrofahrzeugs, dessen Antriebsstrang eine Verbrennungskraftmaschine (VKM) und mindestens einen Elektromotor (EM) umfasst. Ein Start der Verbrennungskraftmaschine wird unterdrückt, wenn sich das Fahrzeug im rein elektrischen Fahrmodus (EV-Modus) befindet und die Fahrdistanz zu einem Zielpunkt des Fahrzeugs weniger als eine vorgegebene Strecke beträgt.

In einer Ausführungsform beträgt die Fahrdistanz weniger als 5 km, beispielsweise weniger als 1 km. In einer weiteren Ausführungsform beträgt die Fahrdistanz weniger als 500 m oder sogar weniger als 100 m.

In einer weiteren Ausführungsform ist die Fahrdistanz größer als die angezeigte Restreichweite des Fahrzeugs im EV-Modus. In einer Ausführungsform ist die Fahrdistanz um bis zu 1 km, oder sogar bis zu 5 km größer als die angezeigte Restreichweite.

In einer anderen Ausführungsform des Verfahrens wird die Startunterdrückung der VKM abhängig von der Entfernung des Fahrzeugs von einer vorgegebenen Position (z.B. "Zuhause", "Arbeitsplatz", etc.) aktiviert. Über die im Navigationsgerät eingetragene Heimatposition (Heimatadresse) kann festgelegt werden, dass z. B. 10 m vor dem Zielort kein Verbrennerzustart mehr erfolgen soll, da es höchstwahrscheinlich ist, dass das Fahrzeug gleich geladen wird. Genutzt werden soll hier die Reservekapazität der Traktionsbatterie. Die Lebensdauereinbuße der Batterie ist minimal im Vergleich zur Lebensdauereinbuße des Verbrennungsmotors durch einen Kurzstreckenbetrieb.

In einer weiteren Variante werden Streckendaten analysiert und für das Verfahren genutzt. Ist beispielsweise eine Arbeitspendelroute bekannt, die den Start von der Ladestelle zu Hause, eine immer gleiche Route zur Arbeit, und das Abstellen an einer Ladestelle im Parkhaus umfasst, so kann beispielsweise festgelegt werden, dass kein Zustart der VKM erfolgen soll, wenn sich das Fahrzeug im 100 m Umkreis des Parkhauses oder des Zuhauses befindet. In einer Ausführungsform erkennt das Navigationssystem, dass sich das Fahrzeug auf einer abgespeicherten Route, z.B. der Arbeitspendelroute, befindet.

In einer anderen Ausführungsform des Verfahrens ist die Restladung einer Traktionsbatterie des Fahrzeugs geringer als ein einen Start der Verbrennungskraftmaschine auslösender vorgegebener Mindestwert. Dieser Mindestwert beträgt in einer Ausführungsform 20% der Batteriekapazität der Traktionsbatterie. Der Mindestwert kann aber auch andere Werte annehmen, je nach eingesetztem Batteriesystem. So kann er auch größer oder kleiner als 20% sein, beispielsweise 25% oder 30% betragen, oder auch nur 15% oder 10%. Im automatischen Betrieb startet das Steuerungssystem des Hybridelektrofahrzeugs die Verbrennungskraftmaschine, sobald der systemintern vorgegebene Mindestwert erreicht bzw. unterschritten wird, damit die Traktionsbatterie keinen Schaden durch eine Tiefenentladung nimmt und im Fahrbetrieb wieder aufgeladen werden kann.

Gegenstand der Erfindung ist auch ein Antriebssystem für ein Hybridelektrofahrzeug, umfassend eine Verbrennungskraftmaschine (VKM) und mindestens einen Elektromotor (EM) zum Antreiben des Fahrzeugs. Das System enthält zudem eine Steuereinheit, die dafür eingerichtet ist, die Leistungsabgabe der VKM und des mindestens einen EM zu regeln. Das Regeln der Leistungsabgabe der VKM schließt Starten und Abstellen der VKM mit ein. Die Steuereinheit ist dafür eingerichtet, Daten eines Navigationsgeräts zu empfangen und zu verarbeiten. In einer Ausführungsform umfassen die Daten des Navigationsgeräts mindestens eine aktuelle Fahrzeugposition und ein aktuelles Fahrziel des Fahrzeugs. In einer weiteren Ausführungsform umfassen die Daten die verbleibende Fahrstrecke (Fahrdistanz) bis zu einem aktuellen Fahrziel des Fahrzeugs, in einer anderen Ausführungsform wird die verbleibende Fahrdistanz von der Steuereinheit berechnet.

In einer Ausführungsform des Antriebssystems ist das Steuergerät dafür eingerichtet, die VKM vor Erreichen des Fahrziels nicht mehr zu starten, wenn die Fahrdistanz zum Fahrziel kleiner ist als ein vorgegebener Wert. In einer Ausführungsform liegt der vorgegebene Wert im Bereich von 100 m bis 5 km, beispielsweise 1 km oder 500 m oder 100 m.

In einer weiteren Ausführungsform des Antriebssystems ist das Steuergerät dafür eingerichtet, die VKM vor Erreichen des Fahrziels nicht mehr zu starten, auch wenn die Restladung einer Traktionsbatterie des Fahrzeugs geringer ist als ein einen Start der Verbrennungskraftmaschine auslösender vorgegebener Mindestwert.

In einer anderen Ausführungsform des Antriebssystems ist das Steuergerät dafür eingerichtet, auf eine entsprechende Eingabe des Fahrers hin die VKM nicht mehr zu starten. Der Fahrer kann durch Aktivieren der Funktion durch eine entsprechende Eingabe, beispielsweise Aktivieren eines dafür vorgesehenen Schalters, den Start der VKM unterdrücken, wenn er das Fahrzeug weiter in EV-Modus betreiben will, beispielsweise, weil er in Kürze eine Pause machen will, gerade einen Parkplatz anfährt o.ä.

Vorteile der Erfindung umfassen die Verlängerung der Lebensdauer der VKM und Energieeinsparung durch Vermeiden schädlicher kurzer Zustarts, Reduzierung von Emissionen (Abgase und Lärm), und Steigerung der Kundenzufriedenheit durch einen optimierten EV-Modus.

## Patentansprüche

1. Verfahren zum Betreiben eines Hybridelektrofahrzeugs, dessen Antriebsstrang eine Verbrennungskraftmaschine (VKM) und mindestens einen Elektromotor (EM) umfasst, worin ein Start der Verbrennungskraftmaschine unterdrückt wird, wenn sich das Fahrzeug im rein elektrischen Fahrmodus (EV-Modus) befindet und die Fahrdistanz zu einem Zielpunkt des Fahrzeugs weniger als eine vorgegebene Strecke beträgt.

2. Verfahren nach Anspruch 1, bei dem die Fahrdistanz weniger als 1 km beträgt.

3. Verfahren nach Anspruch 2, bei dem die Fahrdistanz weniger als 500 m beträgt.

4. Verfahren nach Anspruch 3, bei dem die Fahrdistanz weniger als 100 m beträgt.

5. Verfahren nach einem der voranstehenden Ansprüche, bei dem die Fahrdistanz größer ist als die angezeigte Restreichweite des Fahrzeugs im EV-Modus.

6. Verfahren nach einem der voranstehenden Ansprüche, bei dem die Restladung einer Traktionsbatterie des Fahrzeugs geringer ist als ein einen Start der Verbrennungskraftmaschine auslösender vorgegebener Mindestwert.

7. Verfahren nach Anspruch 6, bei dem der Mindestwert 20% der Batteriekapazität der Traktionsbatterie beträgt.

8. Antriebssystem für ein Hybridelektrofahrzeug, umfassend eine Verbrennungskraftmaschine (VKM) und mindestens einen Elektromotor (EM) zum Antreiben des Fahrzeugs; sowie eine Steuereinheit, die dafür eingerichtet ist, die Leistungsabgabe der VKM und des mindestens einen EM zu regeln, was Starten und Abstellen der VKM mit einschließt, wobei die Steuereinheit dafür eingerichtet ist, Daten eines Navigationsgeräts zu empfangen und zu verarbeiten.

9. Antriebssystem nach Anspruch 8, bei dem das Steuergerät dafür eingerichtet ist, die VKM vor Erreichen des Fahrziels nicht mehr zu starten, wenn die Fahrdistanz zum Fahrziel kleiner ist als ein vorgegebener Wert.

10. Antriebssystem nach Anspruch 8 oder 9, bei dem das Steuergerät dafür eingerichtet ist, auf eine entsprechende Eingabe des Fahrers hin die VKM nicht mehr zu starten.

## Geänderte Patentansprüche

### Geänderte Patentansprüche gemäss Regel 137(2) EPÜ.

1. Verfahren zum Betreiben eines Hybridelektrofahrzeugs, dessen Antriebsstrang eine Verbrennungskraftmaschine (VKM) und mindestens einen Elektromotor (EM) umfasst, worin die Lebensdauer einer Traktionsbatterie gegen die Lebensdauer der Verbrennungskraftmaschine abgewogen und ein Start der Verbrennungskraftmaschine unterdrückt wird, wenn sich das Fahrzeug im rein elektrischen Fahrmodus (EV-Modus) befindet und die Restladung der Traktionsbatterie des Fahrzeugs geringer ist als ein einen Start der Verbrennungskraftmaschine auslösender vorgegebener Mindestwert und eine Fahrdistanz zu einem Zielpunkt des Fahrzeugs weniger als eine vorgegebene Strecke beträgt.

2. Verfahren nach Anspruch 1, bei dem die Fahrdistanz weniger als 1 km beträgt.

3. Verfahren nach Anspruch 2, bei dem die Fahrdistanz weniger als 500 m beträgt.

4. Verfahren nach Anspruch 3, bei dem die Fahrdistanz weniger als 100 m beträgt.

5. Verfahren nach einem der voranstehenden Ansprüche, bei dem die Fahrdistanz größer ist als die angezeigte Restreichweite des Fahrzeugs im EV-Modus.

6. Verfahren nach einem der voranstehenden Ansprüche, bei dem der Mindestwert 20% der Batteriekapazität der Traktionsbatterie beträgt.

7. Antriebssystem für ein Hybridelektrofahrzeug, umfassend eine Verbrennungskraftmaschine (VKM) und mindestens einen Elektromotor (EM) zum Antreiben des Fahrzeugs; sowie eine Steuereinheit, die dafür eingerichtet ist, die Leistungsabgabe der VKM und des mindestens einen EM zu regeln, was Starten und Abstellen der VKM mit einschließt, wobei die Steuereinheit dafür eingerichtet ist, Daten eines Navigationsgeräts zu empfangen und zu verarbeiten und die Lebensdauer einer Traktionsbatterie gegen die Lebensdauer der Verbrennungskraftmaschine abzuwägen und die VKM vor Erreichen des Fahrziels nicht mehr zu starten, wenn die Restladung der Traktionsbatterie des Fahrzeugs geringer ist als ein einen Start der Verbrennungskraftmaschine auslösender vorgegebener Mindestwert und eine Fahrdistanz zum Fahrziel kleiner ist als ein vorgegebener Wert.

8. Antriebssystem nach Anspruch 7, bei dem das Steuergerät dafür eingerichtet ist, auf eine entsprechende Eingabe des Fahrers hin die VKM nicht mehr zu starten.
